# EUROPEAN PATENT SPECIFICATION

(11) **EP 4 560 591 B1**
(45) Date of publication and mention of the grant of the patent: **26.08.2026**
(21) Application number: 25164541.2
(22) Date of filing: 18.03.2025
(51) Int. Cl.: G06V 20/56, G06V 10/82, G01C 21/00, G06N 3/045, G06N 3/08

(54) **METHOD AND APPARATUS FOR CONSTRUCTING MAP BASED ON LARGE MODEL, VEHICLE CONTROL METHOD AND APPARATUS, ELECTRONIC DEVICE, STORAGE MEDIUM, AND PROGRAM PRODUCT**
VERFAHREN UND VORRICHTUNG ZUR KARTENKONSTRUKTION AUF BASIS EINES GROSSEN MODELLS, FAHRZEUGSTEUERUNGSVERFAHREN UND -VORRICHTUNG, ELEKTRONISCHE VORRICHTUNG, SPEICHERMEDIUM UND PROGRAMMPRODUKT
PROCÉDÉ ET APPAREIL DE CONSTRUCTION DE CARTE SUR LA BASE D'UN GRAND MODÈLE, PROCÉDÉ ET APPAREIL DE COMMANDE DE VÉHICULE, DISPOSITIF ÉLECTRONIQUE, SUPPORT DE STOCKAGE ET PRODUIT PROGRAMME

(30) Priority: 16.07.2024 CN 202410954916
(43) Date of publication of application: 28.05.2025
(73) Proprietor: Beijing Baidu Netcom Science Technology Co., Ltd., Beijing 100085 (CN)
(72) Inventor: ZHANG, Wei, Beijing, 100085 (CN); TAN, Xiao, Beijing, 100085 (CN); ZHANG, Weiming, Beijing, 100085 (CN); GONG, Chenting, Beijing, 100085 (CN); Xiaopeng, BI, Beijing, 100085 (CN); JIANG, Minyue, Beijing, 100085 (CN); LI, Yingying, Beijing, 100085 (CN); DING, Errui, Beijing, 100085 (CN); WANG, Jingdong, Beijing, 100085 (CN); WU, Tian, Beijing, 100085 (CN); WANG, Haifeng, Beijing, 100085 (CN)
(74) Representative: Stöckeler, Ferdinand

(56) References cited:
- XIA DEGUO ET AL: "DuMapNet: An End-to-End Vectorization System for City-Scale Lane-Level Map Generation", 20 June 2024 (2024-06-20), pages 1 - 10, XP093273422, Retrieved from the Internet <URL:https://arxiv.org/pdf/2406.14255v1>
- BENCHENG LIAO ET AL: "MapTRv2: An End-to-End Framework for Online Vectorized HD Map Construction", ARXIV.ORG, CORNELL UNIVERSITY LIBRARY, 201 OLIN LIBRARY CORNELL UNIVERSITY ITHACA, NY 14853, 10 August 2023 (2023-08-10), XP091591166

## Description

### TECHNICAL FIELD

The present disclosure relates to a field of artificial intelligence technology, in particular to fields of computer vision, deep learning, large model and generative model technologies, and may be applied to scenarios such as autonomous driving and unmanned driving. Specifically, the present disclosure relates to a method and apparatus for constructing a map based on a large model, a vehicle control method and apparatus, an electronic device, a storage medium, and a program product.

### BACKGROUND

With a rapid development of science and technology, the number of vehicles traveling on roads has shown a rapid growth trend. A vehicle may achieve an autonomous driving function with the help of a road map, and a driver may assist in driving a vehicle based on an accurate road map, thereby improving a driving safety.

In [XIADEGUO ET AL: "DuMapNet: An End-to-End Vectorization System for City-Scale Lane-Level Map Generation", 20 June 2024 (2024-06-20), pages 1-10, XP093273422, Retrieved from the Internet: URL:https://arxiv.org/pdf/2406.14255v1] an end-to-end framework for online vectorized HD map construction is described.

In (BENCHENG LIAO ET AL: "MapTRv2: An End-to-End Framework for Online Vectorized HD Map Construction", ARXIV.ORG, CORNELL UNIVERSITY LIBRARY, 201 OLIN LIBRARY CORNELL UNIVERSITY ITHACA, NY 14853, 10 August 2023 (2023-08-10), XP091591166,) an end-to-end framework for online vectorized HD map construction is described.

### SUMMARY

The present invention is defined as set out in the appended claims.

### BRIEF DESCRIPTION OF THE DRAWINGS

The accompanying drawings are used for better understanding of the solution and do not constitute a limitation to the present disclosure, in which:
FIG. 1 schematically shows an exemplary system architecture to which a method and apparatus for constructing a map based on a large model may be applied according to embodiments of the present disclosure;
FIG. 2 schematically shows a flowchart of a method of constructing a map based on a large model according to embodiments of the present disclosure;
FIG. 3 schematically shows a schematic diagram of a method of constructing a map based on a large model according to embodiments of the present disclosure;
FIG. 4 schematically shows a schematic diagram of an encoder according to embodiments of the present disclosure;
FIG. 5 schematically shows a schematic diagram of a method of constructing a map based on a large model according to another embodiments of the present disclosure;
FIG. 6 schematically shows a flowchart of a vehicle control method according to embodiments of the present disclosure;
FIG. 7 schematically shows a block diagram of an apparatus for constructing a map based on a large model according to embodiments of the present disclosure;
FIG. 8 schematically shows a block diagram of a vehicle control apparatus according to embodiments of the present disclosure; and
FIG. 9 schematically shows a block diagram of an electronic device suitable for implementing a method of constructing a map based on a large model and a vehicle control method according to embodiments of the present disclosure.

### DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those ordinary skilled in the art should realize that various changes and modifications may be made to embodiments described herein without departing from the scope and spirit of the present disclosure. Likewise, for clarity and conciseness, descriptions of well-known functions and structures are omitted in the following description.

In technical solutions of the present disclosure, an acquisition, a storage, an application and other processing of user personal information involved comply with provisions of relevant laws and regulations, take necessary security measures, and do not violate public order and good custom.

A road map with lane-level navigation capability may improve a safety and a traffic efficiency of autonomous driving of vehicles. However, the inventors found that a method of constructing a road map still has problems of a low lane accuracy, and an update efficiency of a road map is not high, making it difficult to accurately represent actual lane attributes such as lane line type, lane line direction, etc.

Embodiments of the present disclosure provide a method and apparatus for constructing a map based on a large model, a vehicle control method and apparatus, an electronic device, a storage medium, and a program product. The method of constructing a map based on a large model includes: acquiring an associated-region lane attribute and an image to be detected, where the image to be detected is collected by an onboard sensor and represents a road region to be detected, the associated-region lane attribute corresponds to an associated road region, and the associated road region and the road region to be detected meet a predetermined similarity condition; constructing a target prompt information based on the associated-region lane attribute; and processing the target prompt information and the image to be detected by using the large model to obtain a regional road map for the road region to be detected.

According to embodiments of the present disclosure, by acquiring the image to be detected collected by the onboard sensor, acquiring the associated-region lane attribute of the associated road region that meets the predetermined similarity condition with the road region to be detected, and constructing the target prompt information based on the associated-region lane attribute, the target prompt information may contain a lane attribute information having a high correlation with a lane of the road region to be detected. Then, the target prompt information and the image to be detected are processed using a large model, and the lane attribute information represented by the target prompt information may be used as an auxiliary understanding content for the image to be detected. Based on the target prompt information, it is possible to control the large model to accurately detect a lane of the road region to be detected with a complete understanding of the lane attribute having a high correlation with the road region to be detected, thereby improving a detection accuracy and a plotting accuracy of the regional road map. In addition, it is possible to acquire images to be detected based on onboard sensors of vehicles traveling near the road region to be detected, so that a large number of images to be detected may be acquired conveniently to construct the regional road map, thereby improving convenience and timeliness of updating the regional road map.

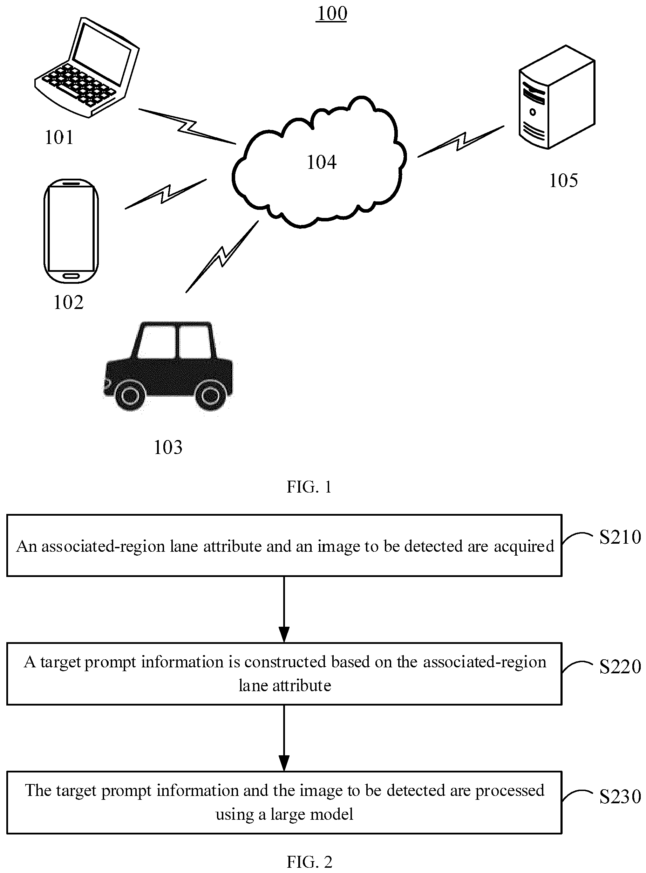

FIG. 1 schematically shows an exemplary system architecture to which a method and apparatus for constructing a map based on a large model may be applied according to embodiments of the present disclosure.

It should be noted that FIG. 1 is merely an example of the system architecture to which embodiments of the present disclosure may be applied, so as to help those skilled in the art understand technical contents of the present disclosure. However, it does not mean that embodiments of the present disclosure may not be applied to other devices, systems, environments or scenarios. For example, in other embodiments, the exemplary system architecture to which the method and apparatus for constructing a map based on a large model may be applied may include a terminal device, but the terminal device may implement the method and apparatus for constructing a map based on a large model without interacting with a server.

As shown in FIG. 1, a system architecture 100 according to such embodiments may include a first terminal device 101, a second terminal device 102, a vehicle 103, a network 104, and a server 105. The network 104 is a medium for providing a communication link between the terminal device 101, the terminal device 102 and the server 105. The network 104 may include various connection types, such as wired and/or wireless communication links, etc.

The terminal device 101 and the terminal device 102 may be used by a user to interact with the server 105 through the network 104 to receive or send messages, etc. The first terminal device 101 and the second terminal device 102 may be installed with various communication client applications, such as knowledge reading applications, web browser applications, search applications, instant messaging tools, email clients and/or social platform software, etc. (only for example).

The first terminal device 101 and the second terminal device 102 may be various electronic devices having display screens and supporting web browsing, including but not limited to smart phones, tablet computers, laptop computers, and desktop computers, etc.

The vehicle 103 may be installed with an onboard sensor, which may include an image sensor. However, the present disclosure is not limited to this, and the onboard sensor may also be other types of sensors such as a laser radar, a millimeter wave radar, etc. The vehicle 103 may be any type of vehicle, such as a car, a truck, etc. The vehicle 103 may be further installed with a communication apparatus, and the vehicle 103 may perform an information transmission with the server 105 via the network 104 based on the communication apparatus.

The server 105 may be a server providing various services, such as a background management server (only for example) that provides a support for content browsed by the user using the first terminal device 101 and the second terminal device 102. The background management server may analyze and process received data such as a user request, and feed back a processing result (such as a web page, an information, or data acquired or generated according to the user request) to the terminal devices.

The server may be a cloud server, also known as a cloud computing server or a cloud host, which is a host product in a cloud computing service system to solve shortcomings of difficult management and weak service scalability existing in a conventional physical host and VPS (Virtual Private Server) service. The server may also be a server of a distributed system or a server combined with a block-chain.

It should be noted that the method of constructing a map based on a large model provided in embodiments of the present disclosure may generally be performed by the server 105. Accordingly, the apparatus for constructing a map based on a large model provided in embodiments of the present disclosure may generally be arranged in the server 105. The method of constructing a map based on a large model provided in embodiments of the present disclosure may also be performed by a server or server cluster that is different from the server 105 and that is capable of communicating with the first terminal device 101, the second terminal device 102, the vehicle 103 and/or the server 105. Accordingly, the apparatus for constructing a map based on a large model provided in embodiments of the present disclosure may also be arranged in a server or server cluster that is different from the server 105 and that is capable of communicating with the first terminal device 101, the second terminal device 102, the vehicle 103 and/or the server 105.

It should be understood that the number of terminal devices, vehicle, network and server shown in FIG. 1 is merely schematic. According to implementation needs, any number of terminal devices, vehicles, networks and servers may be provided.

FIG. 2 schematically shows a flowchart of a method of constructing a map based on a large model according to embodiments of the present disclosure.

As shown in FIG. 2, the method of constructing a map based on a large model includes operations S210 to S240.

In operation S210, an associated-region lane attribute and an image to be detected collected by an onboard sensor are acquired.

In operation S220, a target prompt information is constructed based on the associated-region lane attribute.

In operation S230, the target prompt information and the image to be detected are processed using a large model to obtain a regional road map for a road region to be detected.

The image to be detected represents the road region to be detected. For example, the image to be detected may be a single-frame or multi-frame image obtained from an image acquisition of the road region to be detected. The onboard sensor may include an image acquisition apparatus installed on the vehicle, such as a monocular camera, a surround view camera, a depth camera, or any other type of image acquisition apparatus. The image to be detected may include any type of image, such as a color image, a grayscale image, etc.

The associated-region lane attribute corresponds to the associated road region, and the associated road region and the road region to be detected meet a predetermined similarity condition. The associated road region may include a region at least partially overlapping with the road region to be detected, or the associated road region may include a road region near the road region to be detected, such as a road region adjacent to the road region to be detected, or a road region within a predetermined distance range from the road region to be detected. Alternatively, the associated road region may include a region having a predetermined traffic relationship with the road region to be detected, for example, the road region to be detected and the associated road region belong to a same traffic section (for example, a same expressway, a same viaduct traffic route). The specific setting of the predetermined similarity condition is not limited in embodiments of the present disclosure and may be designed based on actual needs, as long as it may meet the actual needs.

According to embodiments of the present disclosure, the associated-region lane attribute may include an attribute of a lane line in the associated road region, such as a lane shape, a lane type, a position, a lane line topology, etc. It should be noted that the lane type may include a traffic direction indicated by the lane line (such as left turn, forward, etc.), or may include a traffic rule indicated by the lane line, such as allowing a lane change, an opposing traffic indication, etc.

According to embodiments of the present disclosure, the target prompt information may be a serialized identifier or tensor that helps the large model understand a detection task. Based on the associated-region lane attribute contained, the target prompt information may assist the large model in accurately detecting the region lane attribute in the image to be detected, so as to avoid a significant attribute conflict (such as a change in the direction indicated by the lane line) between the associated-region lane attribute and the region lane attribute in a region lane detection result, thereby improving a detection accuracy of the lane line in the road region to be detected.

According to embodiments of the present disclosure, the large model may be a model with a structure having a large number of parameters, and a magnitude of the parameters is generally above tens of millions or hundreds of millions, and may reach billions or tens of billions. In terms of a network structure of the large model, a network structure such as UFO (Unified Feature Optimization) may be used. By processing the image to be detected and the target prompt information using the large model, it is possible to exert a powerful feature understanding capability and expression capability of the large model, and it is possible to efficiently process the images to be detected with a large data scale, thereby improving the detection accuracy and detection efficiency of the regional road map.

According to embodiments of the present disclosure, the associated-region lane attribute includes an associated-region lane position and an associated-region lane type. The associated-region lane position may include a coordinate position of a lane line. The associated-region lane type may include any type such as a color of a lane line in the associated region, a traffic rule indication type, etc.

In an example, the associated-region lane position may be coordinates of one or more points of a lane line in the associated region.

According to embodiments of the present disclosure, constructing the target prompt information based on the associated-region lane attribute may include: performing a feature fusion on the associated-region lane position and the associated-region lane type to obtain an associated-lane position and type feature; and constructing the target prompt information based on the associated-lane position and type feature.

According to embodiments of the present disclosure, performing a feature fusion on the associated-region lane position and the associated-region lane type may include processing the associated-region lane position and the associated-region lane type based on a fusion algorithm. The fusion algorithm may include, for example, matrix multiplication, concatenation, attention algorithm, etc. The specific algorithm type of the fusion algorithm is not limited in embodiments of the present disclosure.

It should be noted that the associated-region lane position and the associated-region lane type may be tokenized, embedded, or otherwise processed to obtain feature vectors representing the associated-region lane position and the associated-region lane type. Then, a feature fusion may be performed on the feature vectors.

According to embodiments of the present disclosure, constructing the target prompt information based on the associated-lane position and type feature may further include constructing the target prompt information based on the associated-lane position and type feature and other features representing the associated-region lane attribute.

In an example, the target prompt information may include an associated-lane spatial feature and the associated-lane position and type feature. The associated-lane spatial feature is obtained by performing a spatial feature extraction on the associated-region lane attribute. The associated-region lane attribute may be represented based on a SD map (standard definition map), and the SD map may be processed based on any type of neural network algorithm such as a convolutional neural network to obtain the associated-lane spatial feature.

In an example, the associated-region lane attribute may be processed based on FPN (Feature Pyramid Networks), so that a multi-level feature extraction and fusion may be performed on a spatial feature of the associated-region lane attribute, then the obtained associated-lane spatial feature may accurately represent a spatial semantic information of the lane line in the associated road region.

In an example, constructing the target prompt information based on the associated-lane position and type feature may include determining the associated-lane position and type feature as the target prompt information.

According to embodiments of the present disclosure, a plurality of associated road regions may be provided, and the associated-region lane attributes of the plurality of associated road regions correspond to a plurality of associated-lane position and type features.

According to embodiments of the present disclosure, the plurality of associated road regions and the road region to be detected may meet a predetermined similarity condition, such as a predetermined distance condition, a predetermined traffic relationship condition, etc., which will not be described in detail here in embodiments of the present disclosure.

According to embodiments of the present disclosure, the plurality of associated-lane position and type features may include at least one reference position and type feature, which may be an associated-lane position and type feature obtained by performing the method provided in embodiments of the present disclosure based on other images to be detected. For example, in a process of performing the method provided in embodiments of the present disclosure for multiple rounds, during an execution of a current i^{th} round, it is possible to acquire the associated-lane position and type feature for the current i^{th} round, and the associated-lane position and type features obtained from a first round to an (i-1)^{th} round may be used as the reference position and type features.

According to embodiments of the present disclosure, constructing the target prompt information based on the associated-lane position and type feature may include: determining, according to at least one associated-lane position and type feature, a correlation weight for each of the plurality of associated-lane position and type features; and fusing the plurality of associated-lane position and type features based on the plurality of correlation weights to obtain the target prompt information.

According to embodiments of the present disclosure, the correlation weight may represent a degree of correlation between the associated road region and the road region to be detected. For example, the degree of correlation may represent a degree of region overlap between the associated road region and the road region to be detected. However, the present disclosure is not limited to this, and the degree of correlation may also represent a distance between an associated road region and the road region to be detected that are spaced apart from each other. For another example, the degree of correlation may also represent other association relationships such as a road traffic relationship between the associated road region and the road region to be detected. The road traffic relationship may represent, for example, convergence, bifurcation, connection, and other relationships between lane lines.

It should be noted that the correlation weight may be expressed in any manner such as a matrix, a numerical value, etc., which is not limited in embodiments of the present disclosure.

According to embodiments of the present disclosure, fusing the plurality of associated-lane position and type features based on the plurality of correlation weights may include performing a weighted average calculation according to the correlation weights of the plurality of associated-lane position and type features to obtain a fused associated-region fusion feature. The target prompt information is determined based on the fused associated-region fusion feature.

According to embodiments of the present disclosure, fusing the plurality of associated-lane position and type features based on the plurality of correlation weights may further include multiplying the correlation weights and the associated-lane position and type features to obtain a plurality of initial associated-region fusion features. The plurality of initial associated-region fusion features may be processed based on an attention network algorithm or other types of neural network algorithms, so as to obtain a fused associated-region fusion feature. The target prompt information is determined based on the fused associated-region fusion feature.

According to embodiments of the present disclosure, determining the target prompt information based on the fused associated-region fusion feature may further include constructing the target prompt information based on the associated-region fusion feature and other features representing the associated-region lane attribute.

In an example, the target prompt information may be constructed based on the associated-region fusion feature and the associated-lane spatial feature. The target prompt information may include the associated-region fusion feature and the associated-lane spatial feature.

The **large** model includes an encoder and a decoder. The encoder and the decoder may be constructed based on an attention network algorithm. For example, the encoder and the decoder may be constructed based on a self-attention network algorithm.

Processing the target prompt information and the image to be detected by using the large model to obtain the regional road map for the road region to be detected includes : fusing the feature to be detected and the target prompt information by using the encoder to obtain a to-be-detected region feature in a bird's eye view space; and processing the target prompt information and the to-be-detected region feature by using the decoder based on an attention mechanism to obtain the regional road map.

According to embodiments of the present disclosure, the feature to be detected may be determined according to the image to be detected. For example, the image to be detected may be processed based on any type of network algorithm such as a convolutional neural network algorithm to obtain the feature to be detected. The feature to be detected may represent a semantic information of data collected by the onboard sensor, so that the lane attribute in the road region to be detected may be represented according to the feature to be detected.

According to embodiments of the present disclosure, the feature to be detected may represent the road region to be detected based on a data collection view of the onboard sensor. Fusing the feature to be detected and the target prompt information using the encoder may include performing a view conversion on the feature to be detected from the view of the onboard sensor based on a preset bird's eye view (BEV) space, and fusing an attribute semantic information of the feature to be detected and an attribute semantic information of the target prompt information. In this way, the obtained to-be-detected region feature in the bird's eye view space may represent the region lane attribute of the lane line in the road region to be detected from the bird's eye view, so as to avoid a representation error in the region lane attribute in the image to be detected acquired by the onboard sensor based on the vehicle-side collection view caused by factors such as occlusion and light exposure, thereby improving the detection accuracy of a subsequent regional road map based on the to-be-detected region feature.

According to embodiments of the present disclosure, it is also possible to generate the to-be-detected region feature based on a plurality of images to be detected acquired by respective onboard sensors of a plurality of vehicles. By determining the features to be detected respectively corresponding to the plurality of onboard sensors, the plurality of features to be detected may represent the road region to be detected from respective data collection views of the plurality of vehicles, and then the to-be-detected region feature may represent the region lane attribute of the road region to be detected according to semantic attributes of the plurality of collection views, thereby improving the representation accuracy of the to-be-detected region feature in the bird's eye view space for the road region to be detected, and further improving the detection accuracy of the regional road map.

According to embodiments of the present disclosure, by processing the target prompt information and the to-be-detected region feature using the decoder based on the attention mechanism, it is possible to further assist the decoder of the large model based on the target prompt information to understand the semantic information representing the region lane attribute in the to-be-detected region feature, thereby reducing an attribute conflict between the associated-region lane attribute and the region lane attribute represented by the regional road map, and improving the detection accuracy and the map generation efficiency of the regional road map.

According to embodiments of the present disclosure, the decoder may be used to process the to-be-detected region feature and part or all of the target prompt information, thereby obtaining the regional road map.

According to embodiments of the present disclosure, the feature to be detected is a multimodal feature to be detected, which is obtained by performing a feature extraction on a multimodal information to be detected. The multimodal information to be detected is acquired by an onboard sensor located in the road region to be detected, and the multimodal information to be detected includes the image to be detected.

According to embodiments of the present disclosure, the multimodal information to be detected may include an image to be detected and a point cloud to be detected. The point cloud to be detected may include modalities such as LiDAR point cloud, millimeter wave radar point cloud, etc. The point cloud to be detected may be collected by an onboard sensor such as LiDAR, millimeter-wave radar, etc. of the vehicle. The information to be detected having different modalities may have a spatial association relationship, so that a position alignment of the multimodal information to be detected may be achieved, and a position alignment of a plurality of multimodal information to be detected acquired from a plurality of vehicles may be achieved.

According to embodiments of the present disclosure, it is possible to perform a feature extraction on the multimodal information to be detected based on any type of deep learning algorithm such as a convolutional neural network, a feature pyramid network, etc., which is not limited in embodiments of the present disclosure.

According to embodiments of the present disclosure, fusing the feature to be detected and the target prompt information by using the encoder to obtain the to-be-detected region feature in the bird's eye view space may further include fusing the multimodal feature to be detected and the target prompt information by using the encoder to obtain the to-be-detected region feature. In this way, the multimodal feature to be detected may be mapped to the bird's eye view space, and the associated-lane attribute of the associated road region represented by the target prompt information may be fused in the to-be-detected region feature in the bird's eye view space, thereby improving the representation accuracy of the to-be-detected region feature for the region lane in the road region to be detected.

The large model further includes a detection head. The detection head may be built based on a neural network algorithm. For example, the detection head may be built based on an attention network algorithm, a convolutional neural network algorithm, or a fully connected layer.

It should be noted that in embodiments of the present disclosure, the large model may be divided into the encoder, the decoder and the detection head in order to illustrate a data processing process of the large model, not to limit a specific network structure boundary of the large model. It may be understood that the detection head of the large model may also be included in the decoder.

Processing the target prompt information and the to-be-detected region feature by using the decoder based on the attention mechanism includes : processing a lane attribute query feature, the target prompt information and the to-be-detected region feature by using the decoder based on the attention mechanism to obtain a target fusion feature; and processing the target fusion feature by using the detection head to obtain the regional road map.

The lane attribute query feature is obtained by fine-tuning the large model. For example, in a process of fine-tuning model parameters of the large model, it is also possible to adjust a tensor of an initialized lane attribute query feature to obtain the lane attribute query feature.

According to embodiments of the present disclosure, the lane attribute query feature may be used as a query feature (Query), and a key feature (Key) and a value feature (Value) may be determined according to the target prompt information and the to-be-detected region feature. Then, the query feature (Query), the key feature (Key) and the value feature (Value) may be processed using the decoder based on a cross-attention mechanism, so as to achieve a full fusion of semantic information of the target prompt information, the to-be-detected region feature and the lane attribute query feature. With a powerful lane attribute understanding capability and expression capability of the large model, the obtained target fusion feature may accurately represent a region lane attribute of the road region to be detected, and the detection accuracy of the regional road map may be improved.

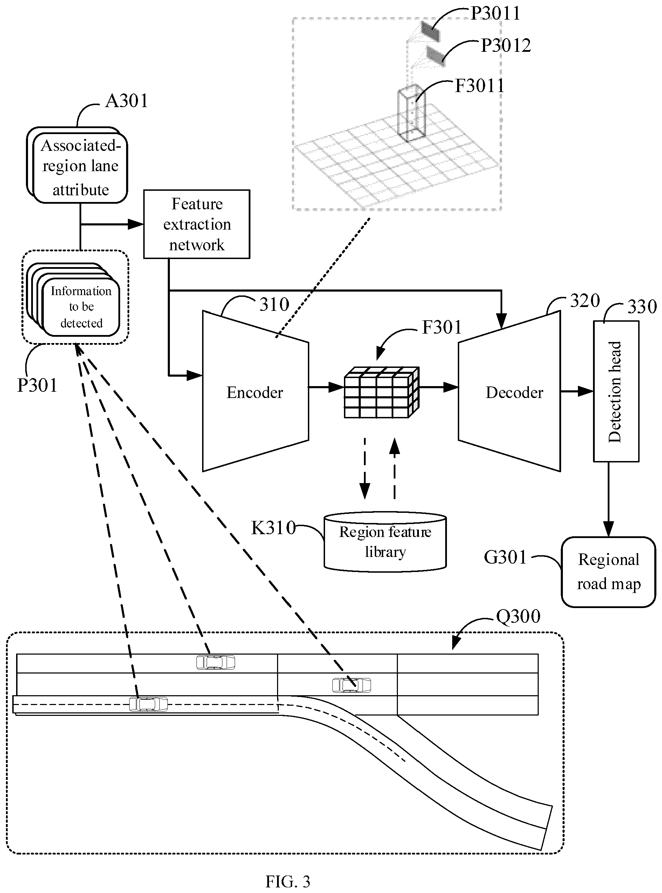

FIG. 3 schematically shows a schematic diagram of a method of constructing a map based on a large model according to embodiments of the present disclosure.

As shown in FIG. 3, a road region to be detected Q300 may include a plurality of vehicles traveling in lanes of a region, and each of the plurality of vehicles may be installed with an onboard sensor. The onboard sensors of the plurality of vehicles may collect multimodal information to be detected, such as images to be detected and point clouds to be detected. By acquiring the information collected by the onboard sensors of the plurality of vehicles in the road region to be detected Q300, it is possible to obtain a plurality of information to be detected P301 for input into the large model. It is also possible to obtain a plurality of associated-region lane attributes A301, which meet a predetermined similarity condition with the road region to be detected Q300, based on a position of the road region to be detected Q300.

As shown in FIG. 3, the plurality of associated-region lane attributes A301 and the plurality of information to be detected P301 are input into a feature extraction network to obtain a target prompt information and a plurality of features to be detected. The plurality of features to be detected and the target prompt information may be input into an encoder 310 of the large model, and a to-be-detected region feature F301 in the bird's eye view space may be output.

As shown in FIG. 3, the road region to be detected Q300 may be divided into a plurality of grid sub-regions arranged in an array. For a first information to be detected P3011 and a second information to be detected P3012 representing a target grid sub-region among the plurality of grid sub-regions, the encoder 310 may map the information to be detected collected from the vehicle-side view into the bird's eye view space, thereby obtaining a region sub-feature to be detected F3011 in the bird's eye view space. It may be understood that after obtaining the region sub-features to be detected in the bird's eye view space respectively corresponding to the plurality of grids, it is possible to determine a to-be-detected region feature F301 in the bird's eye view space.

It should be noted that the first information to be detected P3011 and the second information to be detected P3012 may be collected by onboard sensors of different vehicles in the road region to be detected Q300, and may represent the region lane in the road region to be detected from different vehicle-side views. The features to be detected corresponding to the plurality of vehicle-side views may be fused and mapped to the bird's eye view space to obtain the to-be-detected region feature, so that the region lane attribute of the road region to be detected may be represented accurately.

As shown in FIG. 3, the to-be-detected region feature F301 and the target prompt information may be input into the decoder 320 of the large model, and a target fusion feature may be output. The target fusion feature may be input into the detection head 330 of the large model, and a regional road map G301 containing any region lane attribute such as a regional lane line, a regional lane line topology, a regional lane line type, etc. may be output.

As shown in FIG. 3, the to-be-detected region feature F301 output by the encoder 310 may be further used to update a region feature library K310. The region feature library K310 may store region features to be detected representing the road region to be detected Q300 generated in a plurality of historical periods.

As shown in FIG. 3, it is also possible to fuse the region features to be detected generated in the plurality of time periods and stored in the region feature library K310 to obtain a current to-be-detected region feature F301, and then the road region to be detected Q300 may be accurately detected according to the fused to-be-detected region feature F301, so that the accuracy of the regional road map may be improved.

The target prompt information includes an associated-lane spatial feature and an associated-lane position and type feature. The associated-lane spatial feature is obtained by performing a spatial feature extraction on the associated-region lane attribute, the associated-lane position and type feature is determined according to an associated-region lane position and an associated-region lane type, and the associated-region lane attribute includes the associated-region lane position and the associated-region lane type.

Fusing the feature to be detected and the target prompt information by using the encoder to obtain the to-be-detected region feature includes : fusing the feature to be detected and the associated-lane spatial feature by using a first attention network of the encoder to obtain a spatial fusion feature in the bird's eye view space; and fusing the spatial fusion feature and the associated-lane position and type feature by using a second attention network of the encoder to obtain the to-be-detected region feature.

According to embodiments of the present disclosure, the first attention network and the second attention network may be constructed based on a cross-attention network algorithm. By the fusion of the feature to be detected and the associated-lane spatial feature using the first network, the spatial fusion feature may accurately learn the semantic information of the region lane attribute in the road region to be detected in the bird's eye view space based on the cross-attention mechanism. Then, by the fusion of the spatial fusion feature and the associated-lane position and type feature using the second attention network, the spatial fusion feature in the bird's eye view space may assist in learning the region lane attribute of the region lane in the road region to be detected with the help of the position and type of the lane in the associated road region, so that the to-be-detected region feature may accurately represent important lane semantic attributes such as a type, a position, a topology, etc. of the region lane, thereby improving the detection precision and accuracy of the subsequent region lane map.

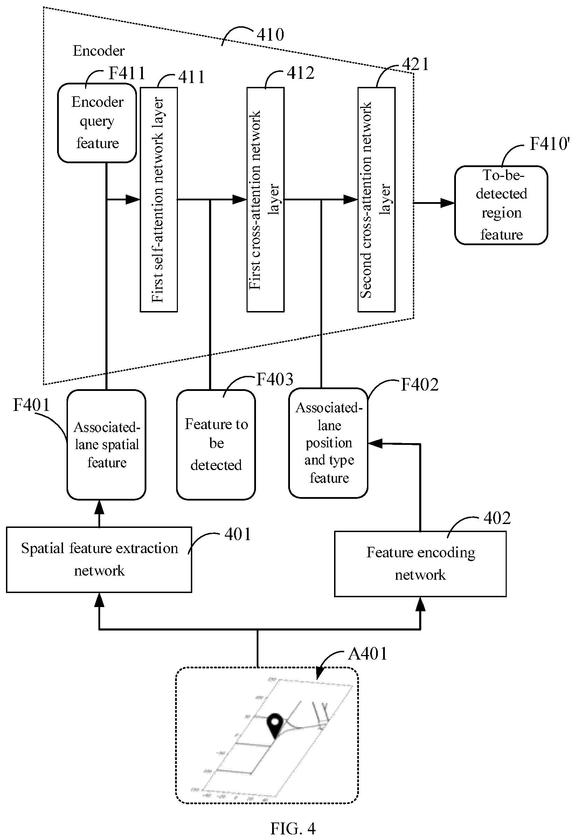

FIG. 4 schematically shows a schematic diagram of an encoder according to embodiments of the present disclosure.

As shown in FIG. 4, the first attention network of the encoder 410 may include a first self-attention network layer 411 and a first cross-attention network layer 412, and the second attention network of the encoder 410 may include a second cross-attention network layer 421. The associated-region lane attribute is represented based on a standard definition map A401 for the associated road region. The standard definition map A401 may be input into a spatial feature extraction network 401, and an associated-lane spatial feature F401 may be output. The spatial feature extraction network 401 may be constructed based on a convolutional neural network algorithm. The standard definition map A401 may be input into a feature encoding network 402, and an associated-lane position and type feature F402 may be output. The feature encoding network 402 may be constructed based on a position encoding layer of a transformer model, so that the obtained associated-lane position and type feature F402 may be represented as a token sequence. It should be understood that the target prompt information may include the associated-lane spatial feature F401 and the associated-lane position and type feature F402.

As shown in FIG. 4, the associated-lane spatial feature F401 and an encoder query feature F411 are fused and then input into the first self-attention network layer 411 to achieve a self-attention enhancement of the associated-lane spatial feature and obtain an enhanced associated-lane spatial feature. The enhanced associated-lane spatial feature as a query feature (key) and the feature to be detected F403 as a value feature and a key feature are input into the first cross-attention network layer 412, and a spatial fusion feature may be output. The spatial fusion feature as a query feature and the associated-lane position and type feature F402 as a value feature and a key feature are input into the second cross-attention network layer 421, and a to-be-detected region feature F410' may be output.

It should be noted that the encoder query feature F411 may be obtained by fine-tuning the large model.

In an example, the to-be-detected region feature and the associated-lane spatial feature in the target prompt information may be input into the decoder, and a target fusion feature may be output.

According to embodiments of the present disclosure, processing the target prompt information and the to-be-detected region feature by using the decoder based on the attention mechanism may include: processing a lane attribute query feature, a key feature and a value feature by using the decoder based on the attention mechanism.

According to embodiments of the present disclosure, the key feature and the value feature are determined based on the to-be-detected region feature and the associated-lane spatial feature. For example, it is possible to fuse the to-be-detected region feature and the associated-lane spatial feature to obtain a fusion to-be-detected region feature, and the fusion to-be-detected region feature is used as the key feature and the value feature.

According to embodiments of the present disclosure, the lane attribute query feature may be obtained by fine-tuning the large model.

The detection head includes a lane line detection head.

Processing the target fusion feature by using the detection head to obtain the regional road map includes processing the target fusion feature by using the lane line detection head to obtain a regional lane line.

The regional road map is determined according to a region lane detection result, and the region lane detection result includes the regional lane line.

According to embodiments of the present disclosure, the regional lane line may include a trajectory of a lane line in the region lane, and may further include a vehicle traffic rule such as a traffic direction indicated by the lane line and a vehicle lane changing manner. The regional lane line may be represented based on vectors.

According to embodiments of the present disclosure, the detection head may further include a lane topology detection head.

According to embodiments of the present disclosure, processing the target fusion feature by using the detection head to obtain the regional road map may further include: processing the regional lane line and the target prompt information by using the lane topology detection head to obtain a region lane topology.

According to embodiments of the present disclosure, the region lane detection result further includes the region lane topology. By processing the lane line detection result and the target prompt information using the lane line topology detection head, the associated lane attribute of the associated road region represented by the target prompt information may be used to assist in detecting the region lane topology between lane lines in the road region to be detected, so that the detection accuracy of the region lane topology may be improved.

According to embodiments of the present disclosure, the detection head may further include a lane group detection head.

According to embodiments of the present disclosure, processing the target fusion feature by using the detection head to obtain the regional road map may further include: processing the target fusion feature by using the lane group detection head to obtain a region lane group.

According to embodiments of the present disclosure, the regional road map is determined according to a region lane detection result, and the region lane detection result includes a region lane group. The region lane group represents an association relationship between at least two lanes in the road region to be detected. For example, it may represent two adjacent region lanes having the same traffic direction.

According to embodiments of the present disclosure, the detection head may further include a lane difference detection head.

According to embodiments of the present disclosure, processing the target fusion feature by using the detection head to obtain the regional road map may further include: processing the target fusion feature by using the lane difference detection head to obtain a target difference information.

According to embodiments of the present disclosure, the target difference information represents that a difference between the associated-region lane attribute and the region lane attribute of the road region to be detected meet a predetermined difference condition, and the region lane detection result further includes the target difference information.

In an example, the target difference information may represent a large difference between the region lane attribute in the current road region to be detected and the associated-region lane attribute representing the associated road region. Therefore, it may be inferred that the associated-region lane attribute is difficult to accurately represent the current associated road region due to road construction, changes in road form rules and so on. In this case, it is possible to use the information to be detected (including at least one of the image to be detected and the point cloud to be detected) collected by the onboard sensor to accurately identify the associated-region lane attribute that needs to be updated, and then use at least one of the image to be detected and the point cloud to be detected, that are related to the associated road region, to generate an associated-region road map for the associated road region, so as to accurately update the map information and improve the accuracy and safety of the autonomous driving function of the vehicle in a plurality of associated road regions.

According to embodiments of the present disclosure, the method of constructing a map based on a large model may further include: in a case of obtaining the target difference information, updating the associated-region lane attribute selected from at least one of an associated-regional lane line, an associated-region lane topology or an associated-region lane group, according to the region lane detection result.

In an example, it is possible to update lane line attributes such as a lane position and a lane type of the associated-regional lane line based on the regional lane line, thereby achieving a rapid calibration and update of the associated-regional lane line.

In an example, the associated-region lane topology may be updated based on the region lane topology.

In an example, the associated-region lane group may be updated based on the region lane group.

It should be understood that the corresponding associated-region lane attribute may be updated based on at least one of the regional lane line, the region lane topology or the region lane group. In this way, it is possible to achieve a real-time update of the associated-region lane attribute of the associated road region by using the information to be detected acquired by the onboard sensor with strong real-time performance, thereby improving a lane attribute update efficiency in an overall road traffic range including the road region to be detected and the associated road region, and improving a traffic safety and traffic efficiency of the vehicle in the overall road traffic range.

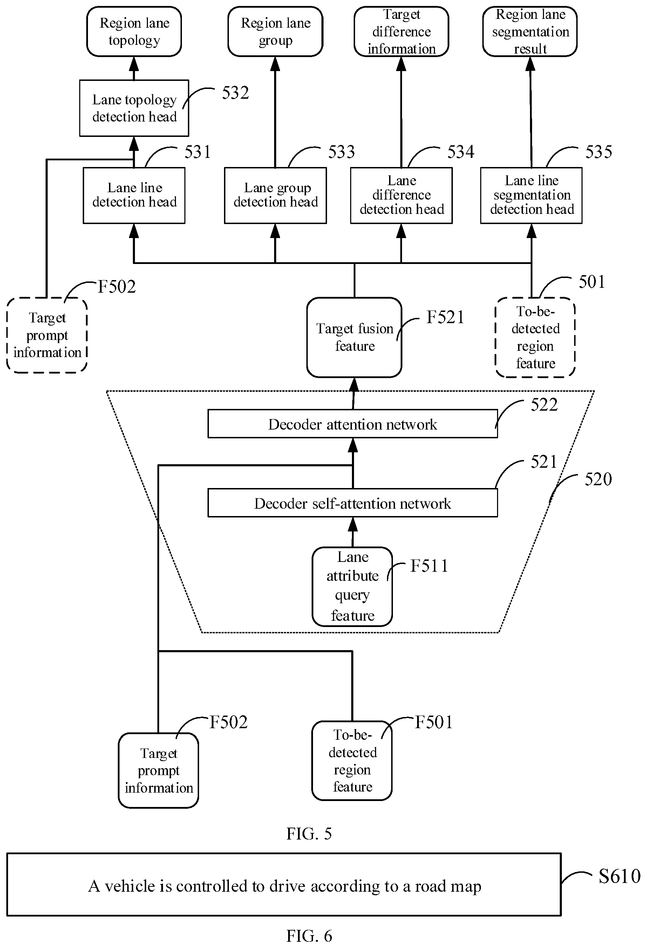

FIG. 5 schematically shows a schematic diagram of a method of constructing a map based on a large model according to another embodiment of the present disclosure.

As shown in FIG. 5, a decoder 520 of the large model may include a decoder self-attention network 521 and a decoder attention network 522. The detection head may include a lane line detection head 531, a lane topology detection head 532, a lane group detection head 533, a lane difference detection head 534 and a lane line segmentation detection head 535. The decoder attention network 522 may be constructed based on a cross-attention network algorithm.

As shown in FIG. 5, a lane attribute query feature F511 obtained after fine-tuning is input into the decoder self-attention network 521 to obtain an enhanced query feature. After a to-be-detected region feature F501 and a target prompt information F502 are fused, a key feature and a value feature are generated. The enhanced query feature, the key feature and the value feature are input into the decoder attention network 522 to obtain a target fusion feature F521.

As shown in FIG. 5, the target fusion feature F521 is input into the lane line detection head 531 to obtain a regional lane line (polyline). The regional lane line and the target prompt information F502 are input into the lane topology detection head 532 to obtain a region lane topology. The target fusion feature F521 is input into the lane group detection head 533 to obtain a region lane group. The target fusion feature F521 is input into the lane difference detection head 534 to obtain a target difference information. The target fusion feature F521 and the to-be-detected region feature 501 are input into the lane line segmentation detection head 535, and a segmentation region between a foreground and a background in the image to be detected may be output, and then a regional lane line may be represented based on the segmentation region.

It should be noted that the to-be-detected region feature F501 and the target prompt information F502 surrounded by dotted-line boxes shown in FIG. 5 may be the same as the to-be-detected region feature F501 and the target prompt information F502 surrounded by solid-line boxes.

In an example, the lane attribute query feature may include three query feature vectors, namely a lane line query feature, a lane group query feature and a lane line segmentation query feature. Different query feature vectors may be input into different decoder self-attention networks, and three enhanced query feature vectors may be used for an attention fusion with the to-be-detected region feature and the target prompt information respectively to obtain three different initial fusion features. Different initial fusion features may be superimposed to obtain a target fusion feature.

According to embodiments of the present disclosure, the method of constructing a map based on a large model may further include: constructing a target navigation map based on the regional road maps for a plurality of road regions to be detected.

According to embodiments of the present disclosure, the plurality of road regions to be detected may belong to a same traffic range, such as a same operating region range or a traffic range in a same city. It is possible to aggregate the regional road maps for the plurality of road regions to be detected to construct a target navigation map representing the overall traffic range, so that the target navigation map may assist the autonomous driving vehicle in performing the autonomous driving function to improve the driving efficiency and safety of the vehicle.

Based on the above-mentioned method of constructing a map based on a large model, embodiments of the present disclosure further provide a vehicle control method, which will be described in conjunction with the accompanying drawings and embodiments.

It should be noted that the process of acquiring, collecting or processing information involved in embodiments of the present disclosure is executed under the condition of obtaining authorization from relevant users or organizations. Furthermore, the relevant users or organizations are clearly informed that the purpose of the methods provided in embodiments of the present disclosure is to improve the driving safety and efficiency of vehicles. The methods provided in embodiments of the present disclosure adopt necessary encryption or desensitization measures for the acquired information, including but not limited to the information to be detected, the associated-region lane attributes, etc., to avoid information leakage.

FIG. 6 schematically shows a flowchart of a vehicle control method according to embodiments of the present disclosure.

As shown in FIG. 6, the vehicle control method may include operation S610.

In operation S610, a vehicle driving is controlled according to a road map.

According to embodiments of the present disclosure, the road map may be constructed according to the method of constructing a map based on a large model provided in embodiments of the present disclosure. For example, the road map may be a regional road map obtained using the method of constructing a map based on a large model provided in embodiments of the present disclosure. For another example, the road map may also be a target navigation map obtained using the method of constructing a map based on a large model provided in embodiments of the present disclosure.

According to embodiments of the present disclosure, by acquiring the road map determined according to the method of constructing a map based on a large model provided in embodiments of the present disclosure, the vehicle may complete a lane-level autonomous driving function with the assistance of an accurate and timely road map, thereby improving the driving safety and driving efficiency of the vehicle.

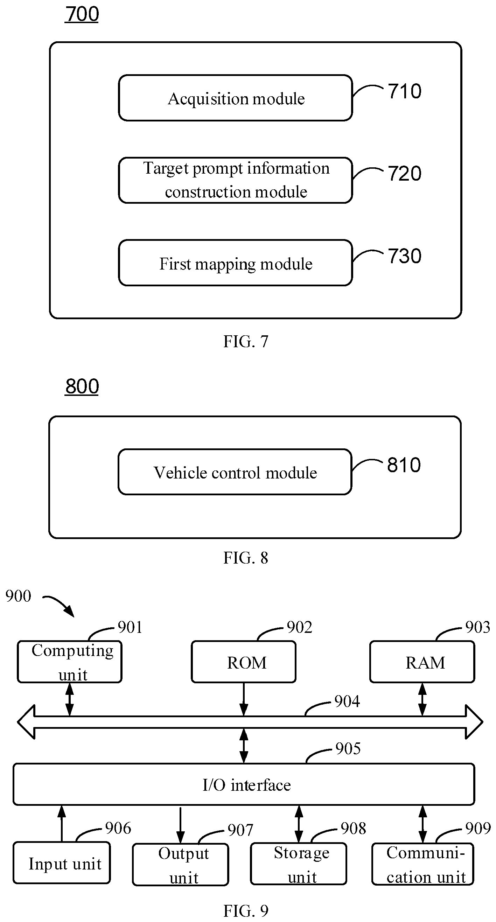

FIG. 7 schematically shows a block diagram of an apparatus for constructing a map based on a large model according to embodiments of the present disclosure.

As shown in FIG. 7, the apparatus for constructing a map based on a large model 700 may include an acquisition module 710, a target prompt information construction module 720, and a first mapping module 730.

The acquisition module 710 is used to acquire an associated-region lane attribute and an image to be detected, where the image to be detected is collected by an onboard sensor and represents a road region to be detected, the associated-region lane attribute corresponds to an associated road region, and the associated road region and the road region to be detected meet a predetermined similarity condition.

The target prompt information construction module 720 is used to construct a target prompt information based on the associated-region lane attribute.

The first mapping module 730 is used to process the target prompt information and the image to be detected by using the large model to obtain a regional road map for the road region to be detected.

According to embodiments of the present disclosure, the large model includes an encoder and a decoder.

According to embodiments of the present disclosure, the first mapping module includes a to-be-detected region feature obtaining sub-module and a regional road map obtaining sub-module.

The to-be-detected region feature obtaining sub-module is used to fuse a feature to be detected and the target prompt information by using the encoder to obtain a to-be-detected region feature in a bird's eye view space, where the feature to be detected is determined according to the image to be detected.

The regional road map obtaining sub-module is used to process the target prompt information and the to-be-detected region feature by using the decoder based on an attention mechanism to obtain the regional road map.

According to embodiments of the present disclosure, the large model further includes a detection head.

According to embodiments of the present disclosure, the regional road map obtaining sub-module includes a target fusion feature obtaining unit and a regional road map obtaining unit.

The target fusion feature obtaining unit is used to process a lane attribute query feature, the target prompt information and the to-be-detected region feature by using the decoder based on the attention mechanism to obtain a target fusion feature, where the lane attribute query feature is obtained by fine-tuning the large model.

The regional road map obtaining unit is used to process the target fusion feature by using the detection head to obtain the regional road map.

According to embodiments of the present disclosure, the detection head includes a lane line detection head.

According to embodiments of the present disclosure, the regional road map obtaining unit includes a regional lane line obtaining sub-unit.

The regional lane line obtaining sub-unit is used to process the target fusion feature by using the lane line detection head to obtain a regional lane line, where the regional road map is determined according to a region lane detection result including the regional lane line.

According to embodiments of the present disclosure, the detection head further includes a lane topology detection head.

According to embodiments of the present disclosure, the regional road map obtaining unit further includes a region lane topology obtaining sub-unit.

The region lane topology obtaining sub-unit is used to process the regional lane line and the target prompt information by using the lane topology detection head to obtain a region lane topology, where the region lane detection result further includes the region lane topology.

According to embodiments of the present disclosure, the detection head includes a lane group detection head.

According to embodiments of the present disclosure, the regional road map obtaining unit includes a region lane group obtaining sub-unit.

The region lane group obtaining sub-unit is used to process the target fusion feature by using the lane group detection head to obtain a region lane group, where the regional road map is determined according to a region lane detection result including the region lane group, and the region lane group represents an association relationship between at least two lanes in the road region to be detected.

According to embodiments of the present disclosure, the detection head includes a lane difference detection head.

According to embodiments of the present disclosure, the regional road map obtaining unit includes a target difference information obtaining sub-unit.

The target difference information obtaining sub-unit is used to process the target fusion feature by using the lane difference detection head to obtain a target difference information, where the target difference information represents that a difference between the associated-region lane attribute and the region lane attribute of the road region to be detected meets a predetermined difference condition, and the region lane detection result further includes the target difference information.

According to embodiments of the present disclosure, the apparatus for constructing a map based on a large model 700 further includes an update module.

The update module is used to, in a case of obtaining the target difference information, update the associated-region lane attribute selected from at least one of an associated-regional lane line, an associated-region lane topology or an associated-region lane group, according to the region lane detection result.

According to embodiments of the present disclosure, the target prompt information includes an associated-lane spatial feature and an associated-lane position and type feature, the associated-lane spatial feature is obtained by performing a spatial feature extraction on the associated-region lane attribute, the associated-lane position and type feature is determined according to an associated-region lane position and an associated-region lane type, and the associated-region lane attribute includes the associated-region lane position and the associated-region lane type.

According to embodiments of the present disclosure, the to-be-detected region feature obtaining sub-module includes a spatial fusion feature obtaining unit and a to-be-detected region feature obtaining unit.

The spatial fusion feature obtaining unit is used to fuse the feature to be detected and the associated-lane spatial feature by using a first attention network of the encoder to obtain a spatial fusion feature in a bird's eye view space.

The to-be-detected region feature obtaining unit is used to fuse the spatial fusion feature and the associated-lane position and type feature by using a second attention network of the encoder to obtain the to-be-detected region feature.

According to embodiments of the present disclosure, the regional road map obtaining sub-module includes a processing unit.

The processing unit is used to process a lane attribute query feature, a key feature and a value feature by using the decoder based on the attention mechanism, where the key feature and the value feature are determined based on the to-be-detected region feature and the associated-lane spatial feature, and the lane attribute query feature is obtained by fine-tuning the large model.

According to embodiments of the present disclosure, the feature to be detected is a multimodal feature to be detected obtained by performing a feature extraction on a multimodal information to be detected, the multimodal information to be detected is detected by an onboard sensor located in the road region to be detected, and the multimodal information to be detected includes the image to be detected.

According to embodiments of the present disclosure, the associated-region lane attribute includes an associated-region lane position and an associated-region lane type.

According to embodiments of the present disclosure, the target prompt information construction module includes a feature fusion sub-module and a target prompt information construction sub-module.

The feature fusion sub-module is used to perform a feature fusion on the associated-region lane position and the associated-region lane type to obtain an associated-lane position and type feature.

The target prompt information construction sub-module is used to construct the target prompt information based on the associated-lane position and type feature.

According to embodiments of the present disclosure, a plurality of associated road regions are provided, and the associated-regions lane attributes of the plurality of associated road regions correspond to a plurality of associated-lane position and type features.

According to embodiments of the present disclosure, the target prompt information construction sub-module includes a correlation weight determination unit and a target prompt information obtaining unit.

The correlation weight determination unit is used to determine, according to at least one associated-lane position and type feature, a correlation weight for each of the plurality of associated-lane position and type features, where the correlation weight represents a degree of correlation between the associated road region and the road region to be detected.

The target prompt information obtaining unit is used to fuse the plurality of associated-lane position and type features based on the plurality of correlation weights to obtain the target prompt information.

According to embodiments of the present disclosure, the apparatus for constructing a map based on a large model 700 further includes a second mapping module.

The second mapping module is used to construct a target navigation map based on the regional road maps for a plurality of road regions to be detected.

FIG. 8 schematically shows a block diagram of a vehicle control apparatus according to embodiments of the present disclosure.

As shown in FIG. 8, a vehicle control apparatus 800 includes a vehicle control module 810.

The vehicle control module 810 is used to control a vehicle driving according to a road map, where the road map is constructed according to the apparatus for constructing a map based on a large model provided in embodiments of the present disclosure.

According to embodiments of the present disclosure, the present disclosure further provides an electronic device, a readable storage medium, and a computer program product.

According to embodiments of the present disclosure, an electronic device is provided, including: at least one processor; and a memory communicatively connected to the at least one processor. The memory stores instructions executable by the at least one processor, and the instructions are used to, when executed by the at least one processor, cause the at least one processor to implement the method of constructing a map based on a large model provided in embodiments of the present disclosure.

According to embodiments of the present disclosure, an electronic device is provided, including: at least one processor; and a memory communicatively connected to the at least one processor. The memory stores instructions executable by the at least one processor, and the instructions are used to, when executed by the at least one processor, cause the at least one processor to implement the vehicle control method provided in embodiments of the present disclosure.

According to embodiments of the present disclosure, an autonomous driving vehicle is provided, including the electronic device for implementing the vehicle control method provided in embodiments of the present disclosure.

According to embodiments of the present disclosure, a non-transitory computer-readable storage medium having computer instructions therein is provided, and the computer instructions are used to cause a computer to implement the methods provided in embodiments of the present disclosure.

According to embodiments of the present disclosure, a computer program product containing a computer program is provided, and the computer program is used to, when executed by a processor, cause the processor to implement the method provided in embodiments of the present disclosure.

FIG. 9 schematically shows a block diagram of an electronic device suitable for implementing the method of constructing a map based on a large model and the vehicle control method according to embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 9, the electronic device 900 includes a computing unit 901 which may perform various appropriate actions and processes according to a computer program stored in a read only memory (ROM) 902 or a computer program loaded from a storage unit 908 into a random access memory (RAM) 903. In the RAM 903, various programs and data necessary for an operation of the electronic device 900 may also be stored. The computing unit 901, the ROM 902 and the RAM 903 are connected to each other through a bus 904. An input/output (I/O) interface 905 is also connected to the bus 904.

A plurality of components in the electronic device 900 are connected to the I/O interface 905, including: an input unit 906, such as a keyboard, or a mouse; an output unit 907, such as displays or speakers of various types; a storage unit 908, such as a disk, or an optical disc; and a communication unit 909, such as a network card, a modem, or a wireless communication transceiver. The communication unit 909 allows the electronic device 900 to exchange information/data with other devices through a computer network such as Internet and/or various telecommunication networks.

The computing unit 901 may be various general-purpose and/or dedicated processing assemblies having processing and computing capabilities. Some examples of the computing units 901 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 901 executes various methods and processes described above, such as the method of constructing a map based on a large model and the vehicle control method. For example, in some embodiments, the method of constructing a map based on a large model and the vehicle control method may be implemented as a computer software program which is tangibly embodied in a machine-readable medium, such as the storage unit 908. In some embodiments, the computer program may be partially or entirely loaded and/or installed in the electronic device 900 via the ROM 902 and/or the communication unit 909. The computer program, when loaded in the RAM 903 and executed by the computing unit 901, may execute one or more steps in the method of constructing a map based on a large model and the vehicle control method described above. Alternatively, in other embodiments, the computing unit 901 may be used to perform the method of constructing a map based on a large model and the vehicle control method by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. A relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors.

## Claims

1. A method of constructing a map based on a large model, comprising:
acquiring (S210) an associated-region lane attribute and an image to be detected, wherein the image to be detected is collected by an onboard sensor and represents a road region to be detected, the associated-region lane attribute corresponds to an associated road region, and the associated road region and the road region to be detected meet a predetermined similarity condition;
constructing (S220) a target prompt information based on the associated-region lane attribute; and
processing (S230) the target prompt information and the image to be detected by using the large model to obtain a regional road map for the road region to be detected,
wherein the large model comprises an encoder (310) and a decoder (320); and
wherein the processing the target prompt information and the image to be detected by using the large model to obtain a regional road map for the road region to be detected comprises:
fusing a feature to be detected and the target prompt information by using the encoder (310) to obtain a to-be-detected region feature (F301) in a bird's eye view space, wherein the feature to be detected is determined according to the image to be detected; and
processing the target prompt information and the to-be-detected region feature (F301) by using the decoder (320) based on an attention mechanism to obtain the regional road map,
wherein the large model further comprises a detection head (330);
wherein the processing the target prompt information and the to-be-detected region feature by using the decoder based on an attention mechanism comprises:
processing a lane attribute query feature (F511), the target prompt information (F502) and the to-be-detected region feature (F501) by using the decoder (520) based on the attention mechanism to obtain a target fusion feature (F521), wherein the lane attribute query feature is obtained by fine-tuning the large model; and
processing the target fusion feature (F521) by using the detection head to obtain the regional road map,
wherein the detection head comprises a lane line detection head (531); and
wherein the processing the target fusion feature by using the detection head to obtain the regional road map comprises:
processing the target fusion feature by using the lane line detection head (531) to obtain a regional lane line, wherein the regional road map is determined according to a region lane detection result comprising the regional lane line,
wherein the target prompt information comprises an associated-lane spatial feature and an associated-lane position and type feature, the associated-lane spatial feature is obtained by performing a spatial feature extraction on the associated-region lane attribute, the associated-lane position and type feature is determined according to an associated-region lane position and an associated-region lane type, and the associated-region lane attribute comprises the associated-region lane position and the associated-region lane type; and
wherein the fusing a feature to be detected and the target prompt information by using the encoder to obtain a to-be-detected region feature comprises:
fusing the feature to be detected and the associated-lane spatial feature by using a first attention network of the encoder (410) to obtain a spatial fusion feature in the bird's eye view space; and
fusing the spatial fusion feature and the associated-lane position and type feature by using a second attention network of the encoder (410) to obtain the to-be-detected region feature;
wherein the processing the target prompt information and the to-be-detected region feature by using the decoder based on an attention mechanism comprises: processing a lane attribute query feature, a key feature and a value feature by using the decoder based on the attention mechanism, wherein the key feature and the value feature are determined based on the to-be-detected region feature and the associated-lane spatial feature, and the lane attribute query feature is obtained by fine-tuning the large model;
wherein the associated-region lane attribute is represented by a standard definition map for the associated road region.

2. The method according to claim 1, wherein the detection head further comprises a lane topology detection head (532); and
wherein the processing the target fusion feature by using the detection head to obtain the regional road map further comprises:
processing the regional lane line and the target prompt information by using the lane topology detection head (532) to obtain a region lane topology, wherein the region lane detection result further comprises the region lane topology.

3. The method according to claim 1, wherein the detection head comprises a lane group detection head (533);
wherein the processing the target fusion feature by using the detection head to obtain the regional road map comprises:
processing the target fusion feature by using the lane group detection head (533) to obtain a region lane group, wherein the regional road map is determined according to a region lane detection result comprising the region lane group, and the region lane group represents an association relationship between at least two lanes in the road region to be detected;
wherein the detection head comprises a lane difference detection head (534), and the processing the target fusion feature by using the detection head to obtain the regional road map comprises: processing the target fusion feature by using the lane difference detection head to obtain a target difference information, wherein the target difference information represents that a difference between the associated-region lane attribute and the region lane attribute of the road region to be detected meets a predetermined difference condition, and the region lane detection result further comprises the target difference information;
wherein the method further comprising: in a case of obtaining the target difference information, updating the associated-region lane attribute selected from at least one of an associated-region lane line, an associated-region lane topology or an associated-region lane group, according to the region lane detection result.

4. The method according to claim 1,
wherein the feature to be detected is a multimodal feature to be detected obtained by performing a feature extraction on a multimodal information to be detected, the multimodal information to be detected is detected by the onboard sensor located in the road region to be detected, and the multimodal information to be detected comprises the image to be detected.

5. The method according to claim 1, wherein the associated-region lane attribute comprises an associated-region lane position and an associated-region lane type; and the constructing a target prompt information based on the associated-region lane attribute comprises: performing a feature fusion on the associated-region lane position and the associated-region lane type to obtain an associated-lane position and type feature (F402); and constructing the target prompt information based on the associated-lane position and type feature;
wherein a plurality of associated road regions are provided, and the associated-regions lane attributes of the plurality of associated road regions correspond to a plurality of associated-lane position and type features, and the constructing the target prompt information based on the associated-lane position and type feature comprises: determining, according to at least one associated-lane position and type feature, a correlation weight for each of the plurality of associated-lane position and type features, wherein the correlation weight represents a degree of correlation between the associated road region and the road region to be detected; and fusing the plurality of associated-lane position and type features based on the correlation weights to obtain the target prompt information;
wherein the method further comprising: constructing a target navigation map based on the regional road maps for a plurality of road regions to be detected.

6. A vehicle control method, comprising:
controlling (S610) a vehicle to drive according to a road map, wherein the road map is constructed according to the method of any one of claims 1 to 5.

7. An electronic device (900), comprising:
at least one processor (901); and
a memory (908) communicatively connected to the at least one processor, wherein the memory stores instructions executable by the at least one processor, and the instructions are configured to, when executed by the at least one processor, cause the at least one processor to implement the method of any one of claims 1 to 6.

8. An autonomous driving vehicle, comprising the electronic device of claim 7.

9. A non-transitory computer-readable storage medium having computer instructions therein, wherein the computer instructions are configured to cause a computer to implement the method of any one of claims 1 to 6.

10. A computer program product containing a computer program, wherein the computer program is configured to, when executed by a processor, cause the processor to implement the method of any one of claims 1 to 6.

## Patentansprüche

1. Ein Verfahren zum Erstellen einer Karte basierend auf einem großen Modell, das folgende Schritte aufweist:
Erfassen (S210) eines Spurattributs eines zugeordneten Bereichs und eines zu detektierenden Bildes, wobei das zu detektierende Bild durch einen eingebauten Sensor aufgenommen wird und einen zu detektierenden Straßenbereich darstellt, das Spurattribut des zugeordneten Bereichs einem zugeordneten Straßenbereich entspricht, und der zugeordnete Straßenbereich und der zu detektierende Straßenbereich eine vorbestimmte Ähnlichkeitsbedingung erfüllen;
Erstellen (S220) einer Ziel-Aufforderung-Information basierend auf dem Spurattribut des zugeordneten Bereichs; und
Verarbeiten (S230) der Ziel-Aufforderung-Information und des zu detektierenden Bildes unter Verwendung des großen Modells, um eine regionale Straßenkarte für den zu detektierenden Straßenbereich zu erhalten,
wobei das große Modell einen Codierer (310) und einen Decodierer (320) aufweist; und
wobei das Verarbeiten der Ziel-Aufforderung-Information und des zu detektierenden Bildes unter Verwendung des großen Modells, um eine regionale Straßenkarte für den zu detektierenden Straßenbereich zu erhalten, folgende Schritte aufweist:
Vereinigen eines zu detektierenden Merkmals und der Ziel-Aufforderung-Information unter Verwendung des Codierers (310), um ein zu detektierendes Bereichsmerkmal (F301) in einem Vogelperspektivenraum zu erhalten, wobei das zu detektierende Merkmal gemäß dem zu detektierenden Bild bestimmt wird; und
Verarbeiten der Ziel-Aufforderung-Information und des zu detektierenden Bereichsmerkmals (F301) unter Verwendung des Decodierers (320) basierend auf einem Aufmerksamkeitsmechanismus, um die regionale Straßenkarte zu erhalten,
wobei das große Modell ferner einen Detektionskopf (330) aufweist;
wobei das Verarbeiten der Ziel-Aufforderung-Information und des zu detektierenden Bereichsmerkmals unter Verwendung des Decodierers basierend auf einem Aufmerksamkeitsmechanismus folgende Schritte aufweist:
Verarbeiten eines Spurattribut-Abfragemerkmals (F511), der Ziel-Aufforderung-Information (F502) und des zu detektierenden Bereichsmerkmals (F501) unter Verwendung des Decodierers (520) basierend auf dem Aufmerksamkeitsmechanismus, um ein Ziel-Vereinigungsmerkmal (F521) zu erhalten, wobei das Spurattribut-Abfragemerkmal durch Feinabstimmung des großen Modells erhalten wird; und
Verarbeiten des Ziel-Vereinigungsmerkmals (F521) unter Verwendung des Detektionskopfes, um die regionale Straßenkarte zu erhalten,
wobei der Detektionskopf einen Spurlinien-Detektionskopf (531) aufweist; und
wobei das Verarbeiten des Ziel-Vereinigungsmerkmals unter Verwendung des Detektionskopfes, um die regionale Straßenkarte zu erhalten, folgenden Schritt aufweist:
Verarbeiten des Ziel-Vereinigungsmerkmals unter Verwendung des Spurlinien-Detektionskopfes (531), um eine regionale Spurlinie zu erhalten, wobei die regionale Straßenkarte gemäß einem Bereichsspur-Detektionsergebnis bestimmt wird, das die regionale Spurlinie aufweist,
wobei die Ziel-Aufforderung-Information ein räumliches Merkmal einer zugeordneten Spur und ein Positions- und Typmerkmal einer zugeordneten Spur aufweist, das räumliche Merkmal der zugeordneten Spur durch Durchführen einer Extraktion eines räumlichen Merkmals an dem Spurattribut des zugeordneten Bereichs erhalten wird, das Positions- und Typmerkmal der zugeordneten Spur gemäß einer Spurposition des zugeordneten Bereichs und einem Spurtyp des zugeordneten Bereichs bestimmt wird, und das Spurattribut des zugeordneten Bereichs die Spurposition des zugeordneten Bereichs und den Spurtyp des zugeordneten Bereichs aufweist; und
wobei das Vereinigen eines zu detektierenden Merkmals und der Ziel-Aufforderung-Information unter Verwendung des Codierers, um ein zu detektierendes Bereichsmerkmal zu erhalten, folgende Schritte aufweist:
Vereinigen des zu detektierenden Merkmals und des räumlichen Merkmals der zugeordneten Spur unter Verwendung eines ersten Aufmerksamkeitsnetzwerks des Codierers (410), um ein räumliches Vereinigungsmerkmal in dem Vogelperspektivenraum zu erhalten; und
Vereinigen des räumlichen Vereinigungsmerkmals und des Positions- und Typmerkmals der zugeordneten Spur unter Verwendung eines zweiten Aufmerksamkeitsnetzwerks des Codierers (410), um das zu detektierende Bereichsmerkmal zu erhalten;
wobei das Verarbeiten der Ziel-Aufforderung-Information und des zu detektierenden Bereichsmerkmals unter Verwendung des Decodierers basierend auf einem Aufmerksamkeitsmechanismus folgende Schritte aufweist: Verarbeiten eines Spurattribut-Abfragemerkmals, eines Schlüsselmerkmals und eines Wertmerkmals unter Verwendung des Decodierers basierend auf dem Aufmerksamkeitsmechanismus, wobei das Schlüsselmerkmal und das Wertmerkmal basierend auf dem zu detektierenden Bereichsmerkmal und dem räumlichen Merkmal der zugeordneten Spur bestimmt werden, und das Spurattribut-Abfragemerkmal durch Feinabstimmung des großen Modells erhalten wird;
wobei das Spurattribut des zugeordneten Bereichs durch eine Standardauflösungskarte für den zugeordneten Straßenbereich dargestellt wird.

2. Das Verfahren gemäß Anspruch 1, wobei der Detektionskopf ferner einen Spurtopologie-Detektionskopf (532) aufweist; und
wobei das Verarbeiten des Ziel-Vereinigungsmerkmals unter Verwendung des Detektionskopfes, um die regionale Straßenkarte zu erhalten, ferner folgenden Schritt aufweist:
Verarbeiten der regionalen Spurlinie und der Ziel-Aufforderung-Information unter Verwendung des Spurtopologie-Detektionskopfes (532), um eine Bereichsspurtopologie zu erhalten, wobei das Bereichsspur-Detektionsergebnis ferner die Bereichsspurtopologie aufweist.

3. Das Verfahren gemäß Anspruch 1, wobei der Detektionskopf einen Spurgruppen-Detektionskopf (533) aufweist;
wobei das Verarbeiten des Ziel-Vereinigungsmerkmals unter Verwendung des Detektionskopfes, um die regionale Straßenkarte zu erhalten, folgenden Schritt aufweist:
Verarbeiten des Ziel-Vereinigungsmerkmals unter Verwendung des Spurgruppen-Detektionskopfes (533), um eine Bereichsspurgruppe zu erhalten, wobei die regionale Straßenkarte gemäß einem Bereichsspur-Detektionsergebnis bestimmt wird, das die Bereichsspurgruppe aufweist, und die Bereichsspurgruppe eine Zuordnungsbeziehung zwischen zumindest zwei Spuren in dem zu detektierenden Straßenbereich darstellt;
wobei der Detektionskopf einen Spurdifferenz-Detektionskopf (534) aufweist und das Verarbeiten des Ziel-Vereinigungsmerkmals unter Verwendung des Detektionskopfes, um die regionale Straßenkarte zu erhalten, folgenden Schritt aufweist: Verarbeiten des Ziel-Vereinigungsmerkmals unter Verwendung des Spurdifferenz-Detektionskopfes, um eine Ziel-Differenzinformation zu erhalten, wobei die Ziel-Differenzinformation darstellt, dass eine Differenz zwischen dem Spurattribut des zugeordneten Bereichs und dem Bereichsspurattribut des zu detektierenden Straßenbereichs eine vorbestimmte Differenzbedingung erfüllt, und das Bereichsspur-Detektionsergebnis ferner die Ziel-Differenzinformation aufweist;
wobei das Verfahren ferner folgenden Schritt aufweist: im Fall des Erhaltens der Ziel-Differenzinformation, Aktualisieren des Spurattributs des zugeordneten Bereichs, das aus zumindest einer von einer Spurlinie des zugeordneten Bereichs, einer Spurtopologie des zugeordneten Bereichs oder einer Spurgruppe des zugeordneten Bereichs ausgewählt wird, gemäß dem Bereichsspur-Detektionsergebnis.

4. Das Verfahren gemäß Anspruch 1,
wobei das zu detektierende Merkmal ein zu detektierendes multimodales Merkmal ist, das durch Durchführen einer Merkmalsextraktion an einer zu detektierenden multimodalen Information erhalten wird, die zu detektierende multimodale Information durch den eingebauten Sensor, der sich in dem zu detektierenden Straßenbereich befindet, detektiert wird und die zu detektierende multimodale Information das zu detektierende Bild aufweist.

5. Das Verfahren gemäß Anspruch 1, wobei das Spurattribut des zugeordneten Bereichs eine Spurposition des zugeordneten Bereichs und einen Spurtyp des zugeordneten Bereichs aufweist; und das Erstellen einer Ziel-Aufforderung-Information basierend auf dem Spurattribut des zugeordneten Bereichs folgende Schritte aufweist: Durchführen einer Merkmalsvereinigung an der Spurposition des zugeordneten Bereichs und dem Spurtyp des zugeordneten Bereichs, um ein Positions- und Typmerkmal der zugeordneten Spur (F402) zu erhalten; und Erstellen der Ziel-Aufforderung-Information basierend auf dem Positions- und Typmerkmal der zugeordneten Spur;
wobei eine Mehrzahl von zugeordneten Straßenbereichen vorgesehen ist, und die Spurattribute der zugeordneten Bereiche der Mehrzahl der zugeordneten Straßenbereiche einer Mehrzahl von Positions- und Typmerkmalen der zugeordneten Spur entsprechen, und das Erstellen der Ziel-Aufforderung-Information basierend auf dem Positions- und Typmerkmal der zugeordneten Spur folgende Schritte aufweist: Bestimmen eines Korrelationsgewichts, gemäß zumindest einem Positions- und Typmerkmal der zugeordneten Spur, für jedes der Mehrzahl von Positions- und Typmerkmalen der zugeordneten Spur, wobei das Korrelationsgewicht einen Korrelationsgrad zwischen dem zugeordneten Straßenbereich und dem zu detektierenden Straßenbereich darstellt; und Vereinigen der Mehrzahl von Positions- und Typmerkmalen der zugeordneten Spur basierend auf den Korrelationsgewichten, um die Ziel-Aufforderung-Information zu erhalten;
wobei das Verfahren ferner folgenden Schritt aufweist: Erstellen einer Ziel-Navigationskarte basierend auf den regionalen Straßenkarten für eine Mehrzahl von zu detektierenden Straßenbereichen.

6. Ein Fahrzeug-Steuerungsverfahren, das folgenden Schrittaufweist:
Steuern (S610) eines Fahrzeugs zum Fahren gemäß einer Straßenkarte, wobei die Straßenkarte gemäß dem Verfahren gemäß einem der Ansprüche 1 bis 5 erstellt wird.

7. Eine elektronische Vorrichtung (900), die folgende Merkmale aufweist:
zumindest einen Prozessor (901); und
einen Speicher (908), der kommunikativ mit dem zumindest einen Prozessor verbunden ist, wobei der Speicher Anweisungen speichert, die durch den zumindest einen Prozessor ausführbar sind, und die Anweisungen, wenn dieselben durch den zumindest einen Prozessor ausgeführt werden, dazu konfiguriert sind, den zumindest einen Prozessor zu veranlassen, das Verfahren gemäß einem der Ansprüche 1 bis 6 zu implementieren.

8. Ein autonom fahrendes Fahrzeug, das die elektronische Vorrichtung gemäß Anspruch 7 aufweist.

9. Ein nichtflüchtiges computerlesbares Speichermedium, das Computeranweisungen darin aufweist, wobei die Computeranweisungen dazu konfiguriert sind, einen Computer zu veranlassen, das Verfahren gemäß einem der Ansprüche 1 bis 6 zu implementieren.

10. Ein Computerprogramm-Produkt, das ein Computerprogramm enthält, wobei das Computerprogramm, wenn dasselbe durch einen Prozessor ausgeführt wird, dazu konfiguriert ist, den Prozessor zu veranlassen, das Verfahren gemäß einem der Ansprüche 1 bis 6 zu implementieren.

## Revendications

1. Procédé de construction d'une carte sur la base d'un grand modèle, comprenant :
l'acquisition (S210) d'un attribut de voie de région associée et d'une image à détecter, dans lequel l'image à détecter est collectée par un capteur embarqué et représente une région routière à détecter, l'attribut de voie de région associée correspond à une région routière associée, et la région routière associée et la région routière à détecter remplissent une condition de similarité prédéterminée ;
la construction (S220) d'informations d'invite cibles sur la base de l'attribut de voie de région associée ; et
le traitement (S230) des informations d'invite cibles et de l'image à détecter par utilisation du grand modèle pour obtenir une carte routière régionale pour la région routière à détecter,
dans lequel le grand modèle comprend un codeur (310) et un décodeur (320) ; et
dans lequel le traitement des informations d'invite cibles et de l'image à détecter par utilisation du grand modèle pour obtenir une carte routière régionale pour la région routière à détecter comprend :
la fusion d'une caractéristique à détecter et des informations d'invite cibles par utilisation du codeur (310) pour obtenir une caractéristique de région à détecter (F301) dans un espace de vue à vol d'oiseau, dans lequel la caractéristique à détecter est déterminée selon l'image à détecter ; et
le traitement des informations d'invite cibles et de la caractéristique de région à détecter (F301) par utilisation du décodeur (320) sur la base d'un mécanisme d'attention pour obtenir la carte routière régionale,
dans lequel le grand modèle comprend en outre une tête de détection (330) ;
dans lequel le traitement des informations d'invite cibles et de la caractéristique de région à détecter par utilisation du décodeur sur la base d'un mécanisme d'attention comprend :
le traitement d'une caractéristique de requête d'attribut de voie (F511), des informations d'invite cibles (F502) et de la caractéristique de région à détecter (F501) par utilisation du décodeur (520) sur la base du mécanisme d'attention pour obtenir une caractéristique de fusion cible (F521), dans lequel la caractéristique de requête d'attribut de voie est obtenue par réglage fin du grand modèle ; et
le traitement de la caractéristique de fusion cible (F521) par utilisation de la tête de détection pour obtenir la carte routière régionale,
dans lequel la tête de détection comprend une tête de détection de ligne de voie (531) ; et
dans lequel le traitement de la caractéristique de fusion cible par utilisation de la tête de détection pour obtenir la carte routière régionale comprend :
le traitement de la caractéristique de fusion cible par utilisation de la tête de détection de ligne de voie (531) pour obtenir une ligne de voie régionale, dans lequel la carte routière régionale est déterminée selon un résultat de détection de voie de région comprenant la ligne de voie régionale,
dans lequel les informations d'invite cibles comprennent une caractéristique spatiale de voie associée et une caractéristique de position et de type de voie associée ; la caractéristique spatiale de voie associée est obtenue en réalisant une extraction de caractéristiques spatiales sur l'attribut de voie de région associée ; la caractéristique de position et de type de voie associée est déterminée selon une position de voie de région associée et un type de voie de région associée, et l'attribut de voie de région associée comprend la position de voie de région associée et le type de voie de région associée ; et
dans lequel la fusion d'une caractéristique à détecter et des informations d'invite cibles par utilisation du codeur pour obtenir une caractéristique de région à détecter comprend :
la fusion de la caractéristique à détecter et de la caractéristique spatiale de voie associée par utilisation d'un premier réseau d'attention du codeur (410) pour obtenir une caractéristique de fusion spatiale dans l'espace de vue à vol d'oiseau ; et
la fusion de la caractéristique de fusion spatiale et de la caractéristique de position et de type de voie associée par utilisation d'un deuxième réseau d'attention du codeur (410) pour obtenir la caractéristique de région à détecter ;
dans lequel le traitement des informations d'invite cibles et de la caractéristique de région à détecter par utilisation du décodeur sur la base d'un mécanisme d'attention comprend : le traitement d'une caractéristique de requête d'attribut de voie, d'une caractéristique clé et d'une caractéristique de valeur par utilisation du décodeur sur la base du mécanisme d'attention, dans lequel la caractéristique clé et la caractéristique de valeur sont déterminées sur la base de la caractéristique de région à détecter et de la caractéristique spatiale de voie associée, et la caractéristique de requête d'attribut de voie est obtenue par réglage fin du grand modèle ;
dans laquelle l'attribut de voie de région associée est représenté par une carte de définition standard pour la région routière associée.

2. Procédé selon la revendication 1, dans lequel la tête de détection comprend en outre une tête de détection de topologie de voie (532) ; et
dans lequel le traitement de la caractéristique de fusion cible par utilisation de la tête de détection pour obtenir la carte routière régionale comprend en outre :
le traitement des informations de ligne de voie régionale et d'invite cibles par utilisation de la tête de détection de topologie de voie (532) pour obtenir une topologie de voie de région, dans lequel le résultat de détection de voie de région comprend en outre la topologie de voie de région.

3. Procédé selon la revendication 1, dans lequel la tête de détection comprend une tête de détection de groupe de voies (533) ;
dans lequel le traitement de la caractéristique de fusion cible par utilisation de la tête de détection pour obtenir la carte routière régionale comprend :
le traitement de la caractéristique de fusion cible par utilisation de la tête de détection de groupe de voies (533) pour obtenir un groupe de voies de région, dans lequel la carte routière régionale est déterminée selon un résultat de détection de voie de région comprenant le groupe de voies de région, et le groupe de voies de région représente une relation d'association entre au moins deux voies dans la région routière à détecter ;
dans lequel la tête de détection comprend une tête de détection de différence de voie (534), et le traitement de la caractéristique de fusion cible par utilisation de la tête de détection pour obtenir la carte routière régionale comprend : le traitement de la caractéristique de fusion cible par utilisation de la tête de détection de différence de voie pour obtenir des informations de différence cibles, dans lequel les informations de différence cibles indiquent qu'une différence entre l'attribut de voie de région associée et l'attribut de voie région de la région routière à détecter remplissent une condition de différence prédéterminée, et le résultat de détection de voie de région comprend en outre les informations de différence cibles ;
dans lequel le procédé comprend en outre : dans un cas d'obtention des informations de différence cibles, la mise à jour de l'attribut de voie de région associée sélectionné parmi au moins l'un des éléments suivants : une ligne de voie de région associée, une topologie de voie de région associée ou un groupe de voies de région associée, selon le résultat de détection de voie de région.

4. Procédé selon la revendication 1,
dans lequel la caractéristique à détecter est une caractéristique multimodale à détecter obtenue en réalisant une extraction de caractéristiques sur des informations multimodales à détecter, les informations multimodales à détecter sont détectées par le capteur embarqué situé dans la région routière à détecter, et les informations multimodales à détecter comprennent l'image à détecter.

5. Procédé selon la revendication 1, dans lequel l'attribut de voie de région associée comprend une position de voie de région associée et un type de voie de région associée ; et la construction d'informations d'invite cibles sur la base de l'attribut de voie de région associée comprend : la réalisation d'une fusion de caractéristiques sur la position de voie de région associée et le type de voie de région associée pour obtenir une caractéristique de position et de type de voie associée (F402) ; et la construction d'informations d'invite cibles sur la base de la caractéristique de position et de type de voie associée ;
dans lequel une pluralité de régions routières associées sont fournies, et les attributs de voie de région associées de la pluralité de régions routières associées correspondent à une pluralité de caractéristiques de position et de type de voie associée, et la construction des informations d'invite cibles sur la base des caractéristiques de position et de type de voie associée comprend : la détermination, selon au moins une caractéristique de position et de type de voie associée, d'un poids de corrélation pour chaque caractéristique de la pluralité de caractéristiques de position et de type de voie associées, dans lequel le poids de corrélation représente un degré de corrélation entre la région routière associée et la région routière à détecter ; et la fusion de la pluralité de caractéristiques de position et de type de voie associées sur la base des poids de corrélation pour obtenir les informations d'invite cibles ;
dans lequel le procédé comprend en outre : la construction d'une carte de navigation cible sur la base des cartes routières régionales pour une pluralité de régions routières à détecter.

6. Procédé de commande de véhicule, comprenant :
la commande (S610) d'un véhicule pour qu'il circule selon une carte routière, dans lequel la carte routière est construite selon le procédé de l'une des revendications 1 à 5.

7. Dispositif électronique (900), comprenant :
au moins un processeur (901) ; et
une mémoire (908) connectée de manière communicative à l'au moins un processeur, dans lequel la mémoire stocke des instructions exécutables par l'au moins un processeur, et les instructions sont configurées pour, lorsqu'elles sont exécutées par l'au moins un processeur, amener l'au moins un processeur à mettre en œuvre le procédé selon l'une des revendications 1 à 6.

8. Véhicule à conduite autonome, comprenant le dispositif électronique selon la revendication 7.

9. Support de stockage non transitoire lisible par ordinateur présentant des instructions informatiques sur celui-ci, dans lequel les instructions informatiques sont configurées pour amener un ordinateur à mettre en œuvre le procédé selon l'une des revendications 1 à 6.

10. Produit de programme informatique contenant un programme informatique, dans lequel le programme informatique est configuré pour, lorsqu'il est exécuté par un processeur, amener le processeur à mettre en œuvre le procédé selon l'une des revendications 1 à 6.
